(19) **Europäisches Patentamt / European Patent Office / Office européen des brevets**

(11) **EP 1 574 819 B1**

(12) **EUROPEAN PATENT SPECIFICATION**

(45) Date of publication and mention of the grant of the patent:
**13.09.2017   Bulletin 2017/37**

(51) Int Cl.:
**G01B 11/25** (2006.01)   **G06T 7/00** (2017.01)

(21) Application number: **05075343.3**

(22) Date of filing: **09.02.2005**

(54) **Identification and labeling of beam images of  a structured beam matrix**

Identifikation und Markierung der Strahlbilder einer strukturierten Strahlmatrix

L'identification et marquage des images du faisceau d'une matrice structurée de faisceau

(84) Designated Contracting States:
**AT BE BG CH CY CZ DE DK EE ES FI FR GB GR HU IE IS IT LI LT LU MC NL PL PT RO SE SI SK TR**

(30) Priority: **23.02.2004   US 784648**

(43) Date of publication of application:
**14.09.2005   Bulletin 2005/37**

(73) Proprietor: **Delphi Technologies, Inc.
Troy, MI 48007 (US)**

(72) Inventors:
• **Kong, Hongzhi
  Kokomo (US)**
• **Sun, Qin
  Kokomo, IN 46902 (US)**
• **Kiselewich, Stephen J.
  Carmel, IN 46032 (US)**

(74) Representative: **Delphi France SAS
Patent Department
22, avenue des Nations
CS 65059 Villepinte
95972 Roissy CDG Cedex (FR)**

(56) References cited:
**EP-A- 1 431 708     WO-A-2004/013572**

• **SENYA KIYASU ET AL: "MEASUREMENT OF THE 3-D SHAPE OF SPECULAR POLYHEDRONS USING AN M-ARRAY CODED LIGHT SOURCE" IEEE TRANSACTIONS ON INSTRUMENTATION AND MEASUREMENT, IEEE SERVICE CENTER, PISCATAWAY, NJ, US, vol. 44, no. 3, 1 June 1995 (1995-06-01), pages 775-778, XP000527562 ISSN: 0018-9456**

**Description**

Technical Field

The present invention is generally directed to identification and labeling of beam images and, more specifically, to identification and labeling of beam images of a structured beam matrix.

Background of the Invention

Some vision systems have implemented dual stereo cameras to perform optical triangulation ranging. However, such dual stereo camera systems tend to be slow for real time applications and expensive and have poor distance measurement accuracy, when an object to be ranged lacks surface texture. Other vision systems have implemented a single camera and temporally encoded probing beams for triangulation ranging. In those systems, the probing beams are sequentially directed to different parts of the object through beam scanning or control of light source arrays. However, such systems are generally not suitable for high volume production and/or are limited in spatial resolution. In general, as such systems measure distance one point at a time, fast two-dimensional (2D) ranging cannot be achieved unless an expensive high-speed camera system is used.

A primary difficulty with using a single camera and simultaneously projected probing beams for triangulation is distinguishing each individual beam image from the rest of the beam images in the image plane. It is desirable to be able to distinguish each individual beam image as the target distance is measured through the correlation between the distance of the target upon which the beam is projected and the location of the returned beam image in the image plane. As such, when multiple beam images are simultaneously projected, one particular location on the image plane may be correlated with several beam images with different target distances. In order to measure the distance correctly, each beam image must be labeled without ambiguity.

In occupant protection systems that utilize a single camera in conjunction with a near IR light projector, to obtain both the image and the range information of an occupant of a motor vehicle, it is highly desirable to be able to accurately distinguish each individual beam image. In a typical occupant protection system, the near IR light projector emits a structured dot-beam matrix in the camera's field of view for range measurement. Using spatial encoding and triangulation methods, the object ranges covered by the dot-beam matrix can be detected simultaneously by the system. However, for proper range measurement, the system must first establish the relationship between the target range probed by each beam and its image location through calibration. Since this relationship is generally unique for each of the beams, while multiple beams are present simultaneously in the image plane, it is desirable to accurately locate and label each of the beams in the matrix.

Various approaches have been implemented or contemplated to accurately locate and label beams of a beam matrix. For example, manually labeling and locating the beams has been employed during calibration. However, manual locating and labeling beams is typically impractical in high volume production environments and is also error prone.

Another beam locating and labeling approach is based on the assumption that valid beams in a beam matrix are always brighter than those beams outside the matrix and the entire beam matrix is present in the image. This assumption creates strong limitations on a beam matrix projector and the sensing range of the system. Due to the imperfection of most projectors, it has been observed that some image noises can be locally brighter than some true beams. Further, desired sensing ranges for many applications result in partial images of the beam matrix being available.

What is needed is a technique that locates and labels beams of a beam matrix that is readily implemented in high-production environments.

One exemplary device is taught in EP 1 429 113 A1. This reference teaches a curved shape inspection method and device that includes the steps of irradiating a surface of a glass sheet (G) with light from a light source (2a) having a specific pattern, a step of picking up an imaged of the glass sheet (G), a step of analyzing the image to extract a reflected image of the light source (2a), and a step of performing a good/defective judgment of the shape of the glass sheet (G) based on the result of comparing data regarding to the extracted reflected image with data regarding to the reflected image by a good product which is registered in advance. Another exemplary device is taught in "Measurement of the 3-D Shape of Specular Polyhedrons Using an M-Array Coded Light Source," IEEE TRANSACTIONS ON INSTRUMENTATION AND MEASUREMENT Vol. 4, No., 3 New York, US (June 1995). This reference teaches reconstructing a shape of a specular object from the image of an M-array coded light source observed after reflection by an object, wherein using the "window property" of the M-array, a correspondence is found between a point on the image of the reflected light source and a point on the light source. Yet another exemplary device is taught in EP 1 431 708 A2. This reference teaches electromagnetic radiation being directed from an optical grating in a regular array of beams in rows and columns toward a target object surface, and the reflected beams being focused through a lens to form beam images on an image plane of a single camera, wherein each of the beam images having a position in the image beam that move substantially linearly with variation of a target distance between an optical grating on a point of the object surface from which the beam image is reflected, and that the direction of the substantially linear movement of each beam image forms a predetermined angle with a column of the array of beam images on the image plane to which that beam belongs at a common target distance.

Summary of the Invention

The present invention is directed to a technique for identifying beam images of a beam matrix. Initially, a plurality of light beams of a beam matrix, which are arranged in rows and columns, are received after reflection from a surface of a target. Next, a reference light beam is located in the beam matrix. Then, a row pivot beam is located in the beam matrix based on the reference beam. Next, remaining reference row beams of a reference row that includes the row pivot beam and the reference beam are located. Then, a column pivot beam in the beam matrix is located based on the reference beam. Next, remaining reference column beams of a reference column, that includes the column pivot beam and the reference beam, are located. Finally, remaining ones of the light beams in the beam matrix are located.

These and other features, advantages and objects of the present invention will be further understood and appreciated by those skilled in the art by reference to the following specification, claims and appended drawings. The invention is defined in appended claims 1 and 8.

Brief Description of the Drawings

The present invention will now be described, by way of example, with reference to the accompanying drawings, in which:

> Fig. 1 is a block diagram of an exemplary object surface sensing system;
> Figs. 2A and 2B are diagrams showing vertical and horizontal triangulation relationships, respectively, for the system of Fig. 1;
> Figs. 3A-3C are diagrams of a 7 by 15 beam matrix images at close, middle and far target ranges, respectively;
> Fig. 4 is a diagram depicting the location of a reference beam in a beam matrix image;
> Fig. 5 is a diagram depicting the location of a row pivot beam in a beam matrix image;
> Fig. 6 is a diagram depicting the determination of the center of gravity of the row pivot beam in a realigned isolated search window;
> Fig. 7 is a flow diagram depicting a main program structure for locating and labeling beams in a beam matrix image;
> Fig. 8 is a flow diagram depicting a routine for locating and labeling beams in a row;
> Fig. 9 is a flow diagram depicting a routine for changing to a new row of the beam matrix image;
> Fig. 10 is a flow diagram depicting a routine for determining boundaries of a beam matrix image; and
> Fig. 11 is a flow diagram depicting a routine for re-labeling the beams of the beam matrix image.

Description of the Preferred Embodiments

According to the present invention, a technique is disclosed that applies a set of constraints and thresholds to locate a reference beam around the middle of a beam matrix. Adjacent to this reference beam, two more beams are located to establish the local structure of the matrix. Using this structure and local updates, the technique identifies valid beams to the matrix boundary. In particular, invariant spatial distribution of the matrix in the image plane and smoothness of energy distribution of valid beams are used to locate each beam and the boundaries of the matrix. The technique exhibits significant tolerance to system variation, image noise and irregularity matrix. The technique is also valid for distorted and partial matrix images. The robustness and speed of the technique provides for on-line calibration in volume production. As is disclosed herein, the technique has been effectively demonstrated with a 7 by 15 beam matrix and a single camera.

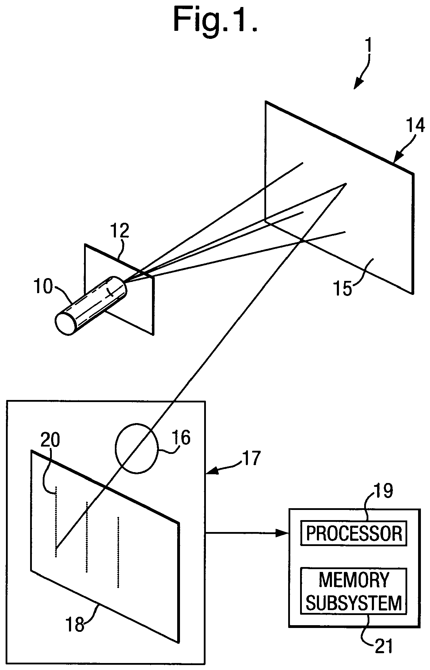

With reference to Fig. 1, an optical surface configuration system 1 is depicted. The system 1 includes a laser or similar source of electromagnetic radiation 10 that directs an optical beam to an optical diffraction grating 12, which splits the beam into a plurality of beams, producing a rectangular grid pattern on a surface 15 of a target 14. The beams are reflected from the surface 15 of the target 14 and a camera 17 is positioned to receive the reflected beams. A lens 16 of the camera 17 focuses the received beams onto an image surface 18, which provides an image plane 20. A processor 19 having a memory subsystem 21 is provided to process the images formed in the image plane 20.

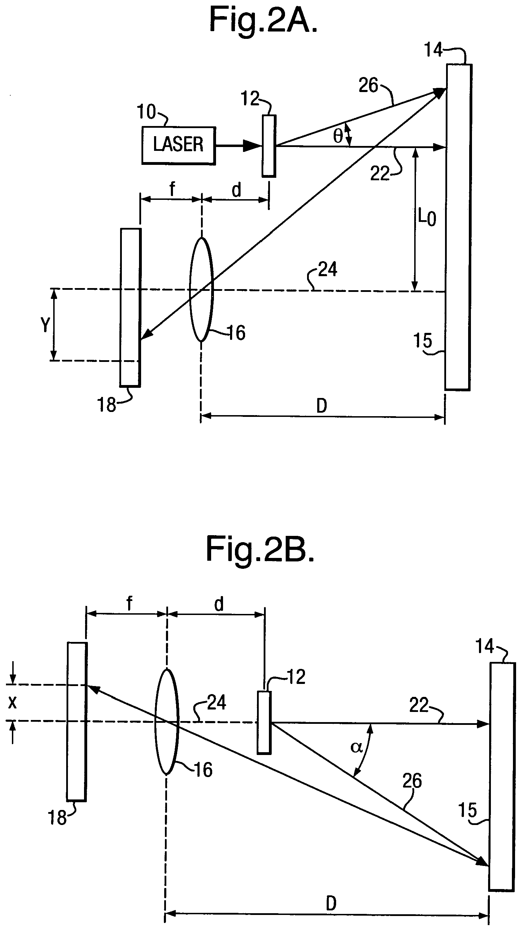

With reference to Fig. 2A, the target 14 is shown having a surface 15 in an x-y plane at distance 'D' in the z direction from the lens 16, where the x direction is perpendicular to the page and the z and y directions are horizontal and vertical, respectively, on the page. The grating 12 is closer than the lens 16 to the surface 15 in the z direction by a distance 'd' and the image surface 18 is a distance 'f' from lens 16 in the opposite z direction. A center 22 of the grating 12 is a distance $L_0$ from the lens axis 24 in the y direction. A beam 26 is directed by grating 12 at an angle $\theta$ from the

horizontal z axis to strike the surface 15 of the target 14 and is reflected back through the lens 16 of the camera 17 to strike the image plane 20 of the camera 17 a distance Y from the lens axis 24. Vertical triangulation is based on a mathematically derived relationship expressed in the following equation:

$$Y = \{ f * [L_0 + (D-d)\tan\theta)]\} / D$$

For a given target distance, the preceding equation uniquely defines an image location Y in the image plane. Thus, the target distance may be derived from the image location in the following equation if d is chosen to be zero (the diffraction grating is placed in the same plane as the camera lens):

$$Y = f * [L_0 / D + \tan \theta]$$

When two dimensional probing beams are involved, horizontal triangulation is generally also employed. A horizontal triangulation arrangement is shown in Fig. 2B, with $\alpha$ being the diffracted beam angle and the image location in the image plane corresponding to X. The mathematical relationship is expressed in the following equation:

$$X = f * (\tan \alpha (1 - d / D))$$

Since the beams have different horizontal diffraction angles $\alpha$, the spatial separation between the beams on the image plane will be non-uniform as 'D' varies. However, if 'd' is made zero (the diffraction grating is placed in the same plane as the camera lens), the dependence will disappear. In the latter case, the distance X may be derived from the following equation:

$$X = f * \tan \alpha$$

It should be appreciated that an optical configuration may be chosen as described above with the optical grating 12 placed in the same plane as the lens 16 of the camera 17. In this manner, the horizontal triangulation, which may cause difficulties for spatial encoding, can be eliminated. In a system employing such a scheme, larger beam densities, larger fields of view and larger sensing ranges for simultaneous multiple beam ranging with a single camera and two dimensional (2D) probing beams can be achieved. Thus, it should be appreciated that the system 1 described above allows a two dimensional (2D) array of beams to be generated by the optical grating 12 to comprise a first predetermined number of rows of beams, each row containing a second number of individual beams. Each of the beams, when reflected from the surface 15 of the target 14, forms a beam image in the image surface 18. The beam paths of all the beam images are straight generally parallel lines and readily allow for optical object-to-surface characterization using optical triangulation in a single camera.

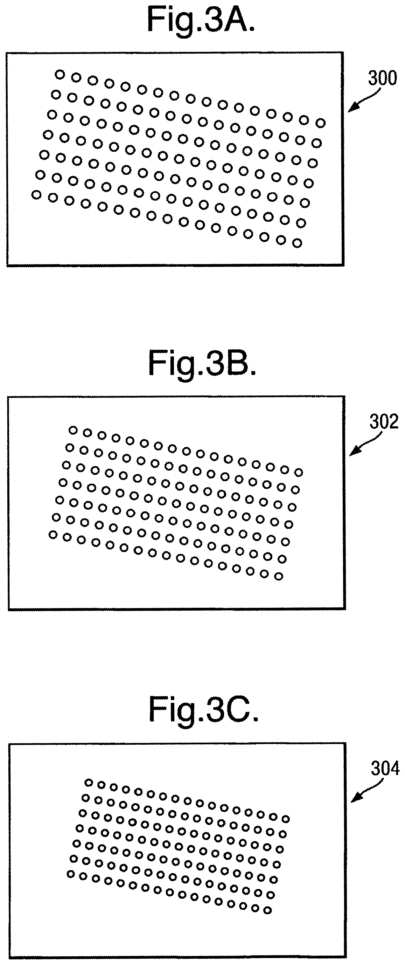

During system calibration, a flat target with a substantially uniform reflectivity is positioned at a distance from the camera system. For a vertical epipolar system (the alignment of the light projector with camera relative to the image frame), the matrix image shifts up and down as target distance varies. As examples, typical matrix images 300, 302 and 304 (at close, middle and far ranges) for the system of Fig. 1 are shown in Figs. 3A-3C, respectively. As is shown in Figs. 3A-3C, optical noise, distortion, non-uniform beam intensity and partial images of the matrix are typical. A goal of an algorithm that implements the present invention is to locate and label each of the beams accurately and consistently.

The algorithm assumes that the beam matrix is approximately periodic and the number of beams in its row and column is known, i.e., N(row) by M(column) in rectangular shape. The algorithm also assumes that inter-beam spacing in the matrix is approximately invariant in the image plane. This condition can be satisfied as long as the beam matrix is projected from a point source onto a flat target. In this case, each beam is projected from this point to a different angle that is matched by camera optics. In this manner, the spatial separation between any two beams in the image plane becomes independent of target distance.

The algorithm also assumes that the nominal inter-beam spacing (between rows and columns) and matrix orientation are known, i.e., center-to-center column distance=$a_0$ (same row), center-to-center row distance=$b_0$ (same column); orientation given by angle=$\theta_0$ rotated clockwise from the horizontal direction in the image plane. Additionally, the algorithm assumes that at least three of the four boundaries of the matrix are present in the image. In the examples described hereafter, it is desirable for the left and right and at least one of the top or bottom boundaries of the beam matrix to be within the image frame. The matrix image is approximately centered in the horizontal direction of the image and moves up and down as the target distance varies (vertical epipolar system). Finally, as a reference, the image pixel coordinate is indicated with x (horizontal) and y (vertical), respectively, with the adjusted origin of the coordinate (0,0) being located at the top left corner of the image.

An algorithm incorporating the present invention performs a number of steps, which seek to locate and label the beams of a beam matrix, which are further described below.

### 1. Locate a reference beam in the beam matrix.

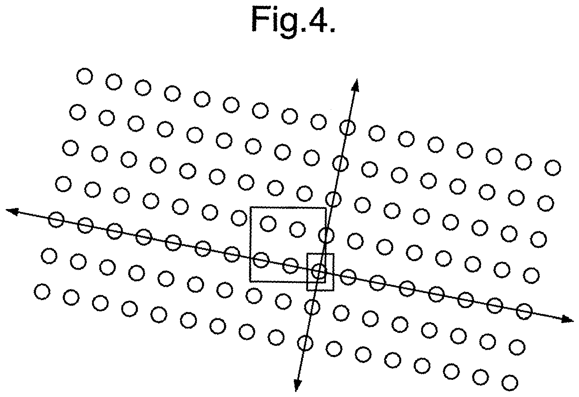

A first beam found in the matrix is referred to herein as a reference beam. The starting point in searching for the reference beam is given by location $(x_i, y_i,)$ where $x_i$ is the middle horizontal point of the image frame in the horizontal direction and a middle vertical point $y_i$ is defined by the possible vertical boundaries of the matrix (see Fig. 4). By using a pre-determined beam size threshold, the first beam that is larger than this threshold from the top at $y_{top}$ and the first beam from the bottom at $y_{bot}$ are located and $y_i$ is determined from the average of the difference $(y_{bot}-y_{top})/2$. Such an arrangement ensures that the starting point is most likely in the middle area of the beam matrix with minimized searching overhead.

Centered at $(x_i, x_i y_i)$, the reference beam is searched in a $2a_0 \cos\theta_0 * 2b_0 \cos\theta_0$ rectangular-shaped window. This window size is selected to ensure that at least one true beam is included, while minimizing the search area. Since multiple beams may be included in the window, only one beam is selected that has the maximum one-dimensional energy (sum of consecutive non-zero pixel values in horizontal and/or vertical direction). In this implementation, the horizontal dimension (x) is used. For the selected beam, its center of gravity Cg(x) in horizontal direction is calculated. Passing through the center of gravity Cg(x), the vertical center of gravity Cg(y) of this beam is further calculated.

It should be appreciated that it is still possible that the boundary of this selected beam may be limited by the boundary of the searching window. In order to accurately locate the reference beam, a smaller window centered at (Cg(x), Cg(y)) may be set to include and isolate the complete target beam. This window is an isolated searching window and is rectangular shaped with size $a_0 \cos\theta_0 * b_0 \cos\theta_0$. Within this isolated searching window, the maximum energy beam is selected and its center of gravity $(Cg(x_{00}), Cg(y_{00}))$ is calculated and the beam is labelled as Beam (0,0). The initial beam labels may be relative to the reference beam. For example, a beam label Beam(n,m) indicates the beam at the $n^{th}$ row and $m^{th}$ column from the reference beam. The sign of the n and m indicates the beam at the right (m>0), left (m<0), top (n<0) or bottom (n>0) of the reference beam. The true label of the beams is updated at a later point using the upper left corner of the matrix.

### 2. Find the row pivot beam from the reference beam.

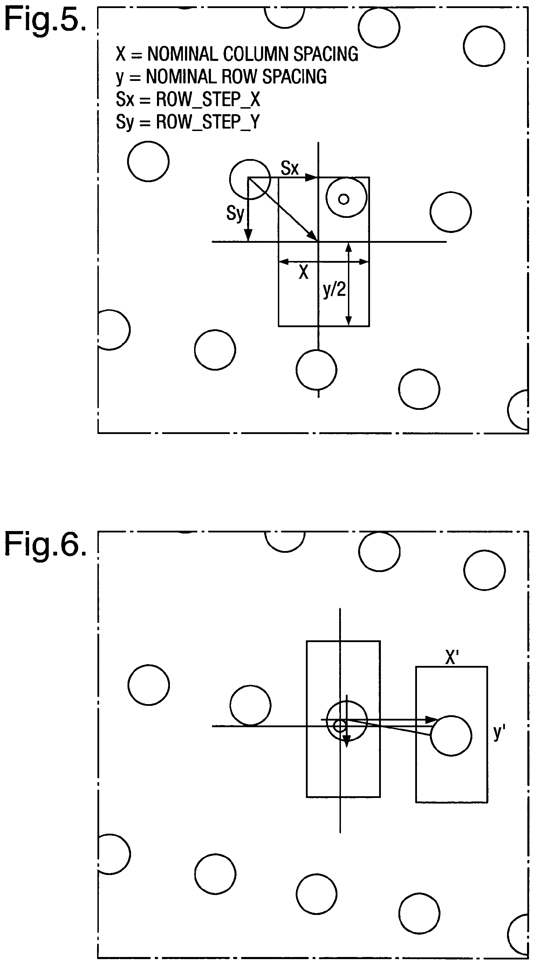

Next, the same-row beam on the right side of the reference beam, i.e., a row pivot beam with label Beam(0,1), is located. Invariant spatial constraint of the matrix in the image plane is applied and the nominal inter-beam column spacing and orientation is used initially (see Fig. 5). From the reference beam, the center of the isolated searching window is moved to the nominal center of Beam(0,1) at location $(x_{01}, y_{01})$:

$$x_{01} = Cg(x_{00}) + a_0 \cos\theta_0$$

$$y_{01} = Cg(y_{00}) + a_0 \sin\theta_0$$

The $a_0 \cos\theta_0$ and $a_0 \sin\theta_0$ are referred to herein as row_step_x and row_step_y values, respectively. Within the window, one beam is selected according to its one-dimensional (x) maximum beam energy. Then the initial center of gravity of this selected beam is calculated. Due to the fact that the nominal beam spacing and matrix orientation have been used, it is possible that the isolated searching window may not include the complete target beam. To increase the system robustness and accuracy, the isolated searching window is re-aligned to the initial center of gravity location (see Fig. 6). The true center of gravity $(Cg(x_{01}), Cg(y_{01}))$ associated with Beam(0,1) is then recalculated. With the locations of the reference beam and the row pivot beam, the local row_step_x and row_step_y values are updated as:

$$row\_step\_x = Cg(x_{01}) - Cg(x_{00})$$

$$row\_step\_y = Cg(y_{01}) - Cg(y_{00})$$

The local matrix orientation is also updated as:

$$\theta = \tan^{-1}\left(\frac{Cg(y_{01}) - Cg(y_{00})}{Cg(x_{01}) - Cg(x_{00})}\right)$$

**3. Locate the remaining beams in the row that includes the reference and the row pivot beams.**

Since the relative positions of nearby beams should be similar (smoothness constraint), the next beam location is predicted from its neighboring beam parameters. Using local row_step_x and row_step_y values from the previous step, the isolated searching window is moved to the next test point to locate and calculate the center of gravity of the target beam. It should be noted that the final beam location (center of gravity) is typically different from the initial test point. In order to increase noise immunity, this difference is used to correct the local matrix structure for the next step. This process is repeated until no valid beam is found (using beam size threshold) or the frame boundary is reached.

For example, to find Beam(0,n+1) (to the right of the reference beam) the isolated window is moved to the test point $(x_{0(n+1)}, y_{0(n+1)})$ from Beam(0,n) at $(Cg(x_{0n}), Cg(y_{0n}))$:

$$x_{0(n+1)} = Cg(x_{0n}) + row\_step\_x(n+1)$$

$$y_{0(n+1)} = Cg(y_{0n}) + row\_step\_y(n+1)$$

$$row\_step\_x(n+1) = row\_step\_x(n) + [Cg(x_{0n}) - x_{0(n)}]/C$$

$$row\_step\_y(n+1) = row\_step\_y(n) + [Cg(y_{0n}) - y_{0(n)}]/C$$

where $n = 1, 2, ..., Cg(x_{0n})$ and $Cg(y_{0n})$ is the center of gravity of Beam(0,n) in x and y directions, and $C \geq 1$ is a correction factor. The choice of C determines the weighting of history (last step) and the presence (current center of gravity). When C=1, for example, the next row steps will be completely updated with the current center of gravity.

In a similar manner, the Beam(0, -n) to the left of the reference beam is found. The isolated window is then moved to the test point $(x_{0(-n)}, y_{0(-n)})$:

$$x_{0(-n)} = Cg(x_{0(1-n)}) + row\_step\_x(-n)$$

$$y_{0(-n)} = Cg(y_{0(1-n)}) + row\_step\_y(-n)$$

$$row\_step\_x(-n) = row\_step\_x(-n+1) + [Cg(x_{0(1-n)}) - x_{0(1-n)})]/C$$

$$row\_step\_y(-n) = row\_step\_y(-n+1) + [Cg(y_{0(1-n)}) - y_{0(1-n)})]/C$$

**4. Find the column pivot beam from the reference beam.**

Then, the next same-column beam on the topside of the reference beam, i.e., a column pivot beam with label Beam(-1,0), is located. The nominal row distance $b_0$ and the updated local matrix orientation are used to move the isolated searching window to the predicted location $(x_{(-1)0}, y_{(-1)0})$ for Beam(-1,0):

$$x_{(-1)0} = Cg(x_{00}) + b_0 \sin\theta$$

$$y_{(-1)0}=Cg(y_{00})+b_0\cos\theta$$

The values $b_0\sin\theta$ and $b_0\cos\theta$ are referred to herein as column_step_x and column_step_y, respectively. The calculation of the center of gravity $(Cg(x_{(-1)0}),Cg(y_{(-1)0}))$ is similar to that described for the row pivot beam. With the locations of the reference beam and the column pivot beam, the local column_step_x and column_step_y are updated as:

$$column\_step\_x=Cg(x_{(-1)0})-Cg(x_{00})$$

$$column\_step\_y=Cg(y_{(-1)0})-Cg(y_{00})$$

**5. Locate the remaining beams in the column that include the reference and the column pivot beams.**

Starting from the reference beam or column pivot beams, the isolated searching window is moved down or up to the next neighboring beam using the updated column_step_x and column_step_y to the next neighboring beam. Similar to searching in rows, once the center of gravity of this new beam is located, the local column_step_x and column_step_y is updated for the next step. This process is repeated until no valid beam can be found or the image frame boundary is reached.

**6. Locate the rest beams in the matrix.**

At this point, one row and one column crossing through the reference beam in the matrix has been located and labeled. Locating and labeling the rest of the beams can be carried out row-by-row, column-by-column or by a combination of the two. Since the process relies on the updated local matrix structure, the sequence of locating the next beam is always outward from the labeled beams. For example, the next row above the reference beam can be labelled by moving the isolated searching window from known Beam(-1,0) to next Beam(-1,1). Its row_step_x and row_step_y values should be the same as that of its local steps already updated by Beam(0,0) and Beam(0,1). Once the Beam(-1,1) is located, the new row_step_x and row_step_y values are updated using the relative location of Beam(-1,1) and Beam(-1,0). The process is repeated until all the valid beams in the row are located. Similarly, the beams in the next row are located until reaching the frame boundary or no beams are found.

**7. Determine the true matrix boundaries.**

The beams located to this point may include "false beams" that correspond to noise in the image. This is particularly true for a beam matrix that is created from a diffraction grating. In this case, higher order diffractions cause residual beams that are outside of the intended matrix but have similar periodic structures. In order to determine the true matrix boundaries, energy discrimination and matrix structure constraints may be employed.

Since both of the column boundaries are present in the image, the total number of beams in one complete row must be equal to M for an N by M matrix. However, since the matrix can be rotated relative to the image frame, exceptions may occur when an incomplete row is terminated by the top or bottom boundary of the image. As such, those rows are not used in determining the column boundaries. Further, the rows that are not terminated by the frame boundaries but with beams less than M are discarded as noise. For any normally terminated row, if the total number of beams is larger than M, the additional beams are dropped one at a time from the most outside beams in the row using the fact that the noise energy should be significantly less than that of a true beam. The less energy beam between the beams at both ends of the row is dropped first. This process is repeated until M beams remain in the row. In order to eliminate possible singularities, a majority vote from each row is used to decide the final column boundaries. If there are rows that are inconsistent with the majority vote, their boundaries are adjusted to be compliant.

The row boundaries of the matrix are determined in two different cases. If both boundaries are not terminated by image frame boundaries, the similar process described above for the column boundaries is used except that the known number of rows in the matrix is N. If one of the row boundaries is terminated by the frame boundary, the remaining number of rows in the image becomes uncertain. It is assumed that the energy variations between adjacent beams within the true matrix should be much smoother than that at the matrix boundaries. This energy similarity constraint among valid beams is applied in finding the row boundaries. Within the already defined column boundaries, the average beam energy for each row is calculated. Starting from the row that includes the reference beam outwards, the percentage change of energy between the adjacent rows is calculated. When the change is a decrease and larger than a predetermined threshold, the boundary is determined at the transition.

If the remaining number of rows is less than N for the N by M matrix, the beams in the rows that are terminated by frame boundaries are retained and labelled, within the limit of N beams in the column.

## 8. Label the final matrix with boundary conventions.

For consistent labels with different frames, the relative labels with the reference beam are converted to a conventional matrix labels. The top left corner beam is labelled as Beam(1,1), the top right corner beam as Beam(1,M), the left bottom beam as Beam(N,1) and the right bottom beam as Beam(N,M). The conversion is carried out with known matrix boundaries and the relative labels.

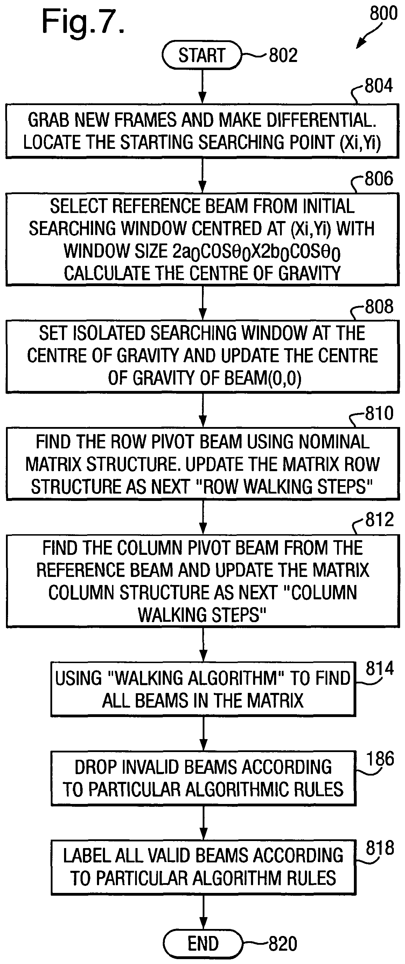

While the algorithm has been implemented and demonstrated with a 7 by 15 beam matrix, it should be appreciated that the techniques described herein are applicable to beam matrices of different dimensions. Further, while the light projector has been described as consisting of a pulsed laser and a diffraction grating that splits the input laser beam into the matrix, other apparatus may be utilized within the scope of the invention. In any case, a VGA resolution camera aligned vertically with the projector may capture the image of the matrix on a flat target. In such a system, it is desirable to synchronize the laser light with the camera so that the images with and without the projected light can be captured alternately. Using the differential image from the alternated frames, the beam matrix may then be extracted from the background. The differential images are then used to locate and label the beams as described above. Flow charts for implementing the above describe technique are set forth in Figs. 7-11, which are further described below.

With reference to Fig. 7, a flow chart of a routine 800 that locates valid beams of a beam matrix is further depicted. In step 802, the routine 800 is initiated, at which point control transfers to step 804, where new image frames are captured using a differential approach and an initial search point $(x_i, y_i)$ is located. Next, in step 806, a reference beam is selected from an initial search window centered at the searching point and utilizing a window size $2a_0\cos\theta_0 * 2b_0\cos\theta_0$. Then, in step 808, an isolated searching window is set at the center of gravity of the reference beam and the center of gravity of the reference Beam(0,0) is updated. Next, in step 810, a row pivot beam is found using the nominal matrix structure and the matrix row structure is updated using a next row walking step. Then, in step 812, a column pivot beam is found from the reference beam and the matrix column structure is updated as a next column using next column walking steps. Next, in step 814, a walking algorithm is used to find all the beams in the matrix. Then, in step 816, the invalid beams are dropped, as is disclosed herein. Then, in step 818, all valid beams are labelled and, finally, in step 820, the routine 800 terminates.

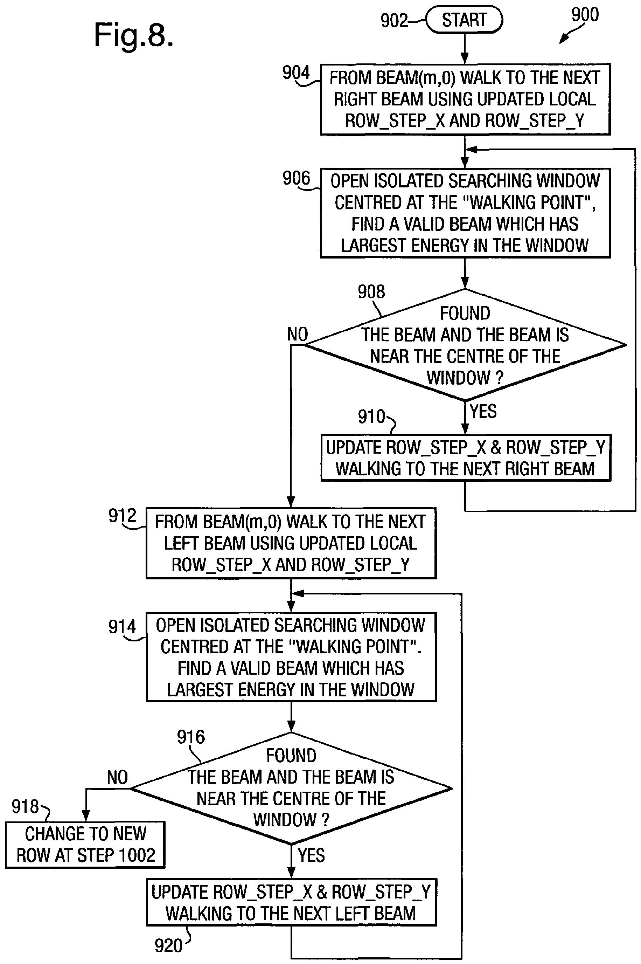

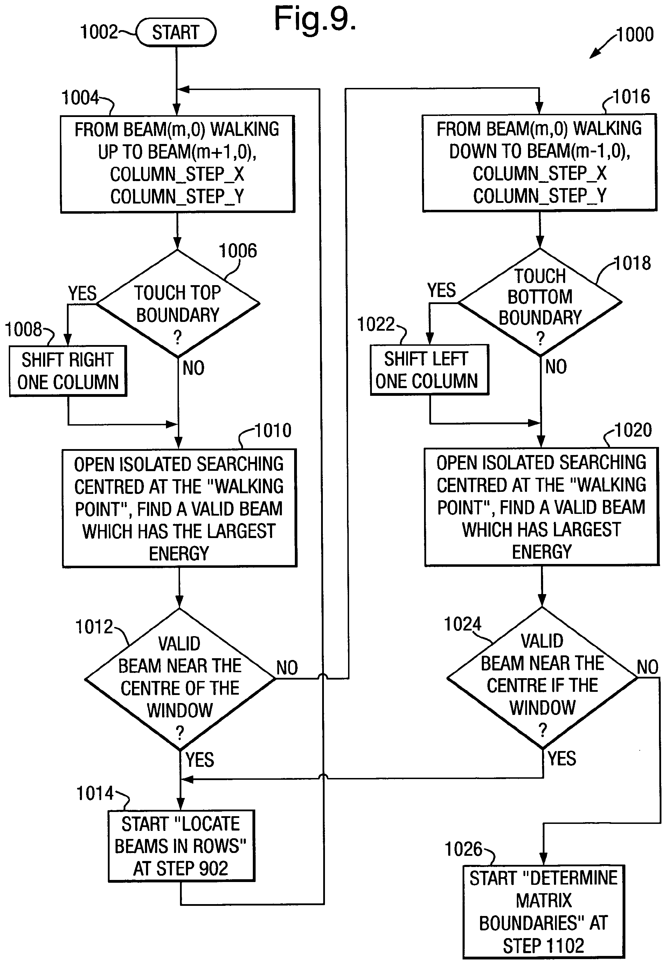

With reference to Fig. 8, a flow chart of a routine 900 is illustrated that discloses a technique for locating beams in a row. In step 902, the routine 900 is initiated, at which point control transfers to step 904, where the routine 900 walks from Beam(m,0) to the next right beam using an updated local row_step_x and row_step_y values. Next, in step 906, an isolated searching window, centered at the walking point, is opened and a valid beam with the highest energy in the window is located. Then, in decision step 908, the routine 900 attempts to find a beam that is located at near the center of the window. If a beam is located and it is near the center of the window (judged with a pre-determined threshold), control transfers from step 908 to step 910, where the routine 900 updates the row_step_x and row_step_y values before walking to the next right beam and transferring control to step 906. Otherwise, if the beam is not near the center of the window in step 908, control transfers to step 912, where the routine 900 walks from Beam(m,0) to the next left beam using the updated local row_step_x and row_step_y values. Next, in step 914, an isolated searching window, centered at the walking point, is opened and a valid beam that has the largest energy in the window is located. Next, in decision step 916, it is determined whether a beam is found near the center of the window. If so, control passes to step 918, where the routine 900 implements subroutine 1000 to change to a new row (see Fig. 9). If a beam is not found near the center of the window in step 916, control passes to step 920, where row_step_x and row_step_y values are updated before walking to the next left beam, before control returns to step 914.

With reference to Fig. 9, a routine 1000 is illustrated. In step 1002, the routine 1000 is initiated, at which point control transfers to step 1004, where the routine 1000 walks from Beam(m,0) to Beam(m+1,0) using the column_step_x and column_step_y values. Next, in decision step 1006, it is determined whether a top boundary has been touched. If so, control transfers to step 1008, where the routine 1000 shifts right one column. Otherwise, control transfers to step 1010, where an isolated searching window, centered at the walking point, is opened in an attempt to find a valid beam that has the largest energy. Then, in decision step 1012, it is determined whether a valid beam is near the center of the window. If so, control transfers from step 1012 to step 1014, where the process of locating beams in a row is initiated. If a valid beam is not located near the center of the window in step 1012, control transfers to step 1016. In step 1016, the routine 1000 walks from Beam(m,0) to Beam(m-1,0) using the column_step_x and column_step_y values. Next, in decision 1018, it is determined whether a bottom boundary has been reached. If so, control transfers to step 1022, where a one column shift to the left is implemented before transferring control to step 1020. In step 1018, when a bottom boundary has not been reached, control transfers to step 1020, where an isolated searching window, centered at the walking point, is opened in an attempt to find a valid beam that has the largest energy. Next, in decision step 1024, it is determined whether a valid beam is near the center of the search window. If so, control transfers from step 1024 to step 1014. Otherwise, control transfers from decision step 1024 to step 1026, where the determined matrix boundaries process is initiated.

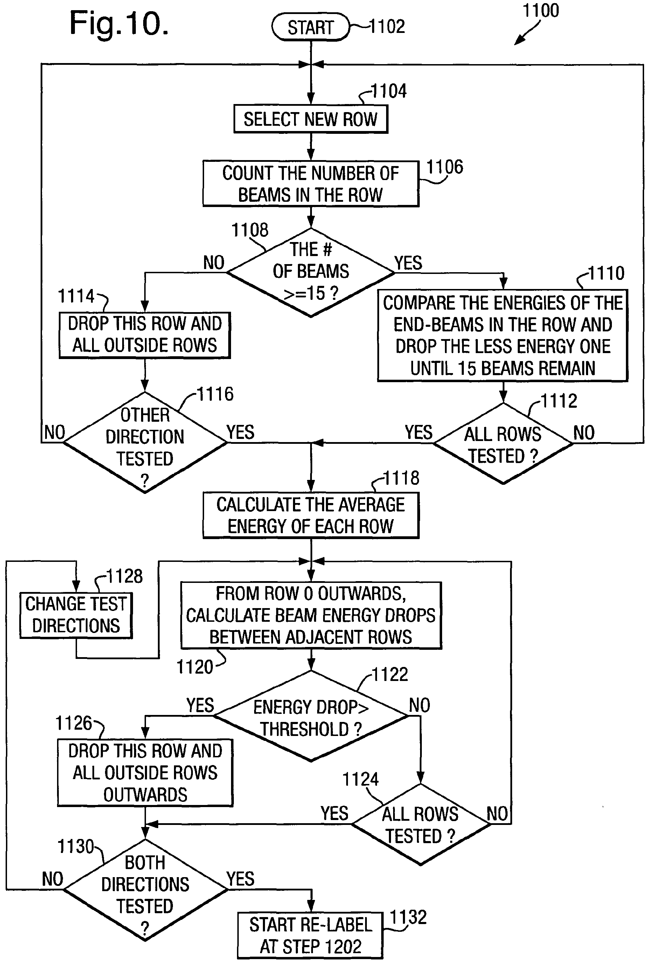

With reference to Fig. 10, a routine 1100 is depicted that determines the matrix boundaries. In step 1102, the routine 1100 is initiated, at which point control transfers to step 1104, where a new row is selected. Next, in step 1106, the number of beams in a row is counted. Then, in decision step 1108, it is determined if the number of beams is greater than or equal to 15. If so, control transfers to step 1110, where the energies of the end-beams in the row are compared and the beams with the less energy are dropped until 15 beams remain, and then to decision step 1112. In step 1108, if the number of beams is less than or equal to 15, control transfers to step 1114, where the current row and all outside rows are dropped. Next, in decision step 1116, it is determined whether the other direction has been tested. If not, control transfers from step 1116 to step 1104. Otherwise, control transfers from step 1116 to step 1118, where the average energy of each row is calculated. In step 1112, it is determined whether all rows have been tested and, if so, control transfers to step 1118. Otherwise, control transfers from step 1112 to step 1104. From step 1118, control transfers to step 1120, where the beam energy drop between adjacent rows, from row 0 outwards, is calculated. Then, in decision step 1122, it is determined whether the energy drop is greater than a threshold. If so, control transfers to step 1126, where the current row and all outside rows outwards of the current row are dropped. If the energy drop is not greater than the threshold in decision step 1122, control transfers to decision step 1124, where it is determined whether all rows have been tested. If so, control transfers to decision step 1130. Otherwise, control transfers from step 1124 to step 1120. In step 1130, it is determined whether both directions have been tested from the center of the matrix and, if so, control transfers to step 1132, where the re-label process is initiated. Otherwise, control transfers from step 1130 to step 1128, where the test direction is changed, and then to step 1120.

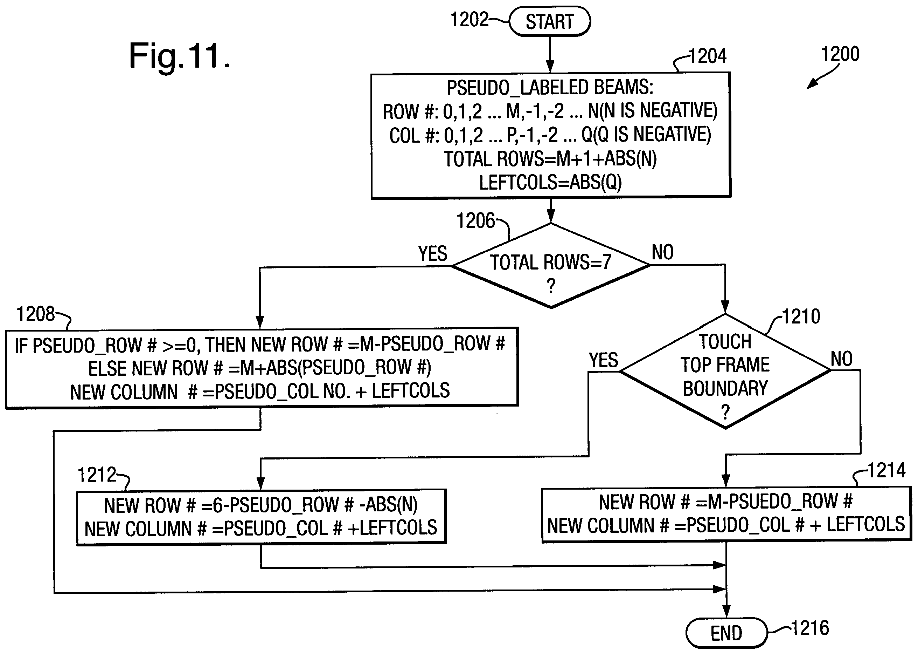

With reference to Fig. 11, a re-labeling routine 1200 is initiated in step 1202, at which point control transfers to step 1204, where the total number of rows that are currently labelled is determined. Next, in decision step 1206, it is determined whether the total number of rows is equal to 7. If so, control transfers to step 1208. Otherwise, control transfers to decision step 1210. In step 1208, re-labeling of the beams is initiated. In decision step 1210, it is determined whether beams touch the top frame boundary of the matrix. If so, control transfers to step 1212, where re-labeling of the beams is initiated. Otherwise, control transfers to step 1214, where re-labeling of the beams is initiated. From steps 1208, 1212 and 1214, control transfers to step 1216, where the routine 1200 terminates.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims.

## Claims

1. A method (800) of identifying beam images of a beam matrix, comprising the steps of:

   receiving a plurality of light beams of a beam matrix after reflection from a surface of a target (804), wherein the beam matrix is arranged in rows and columns;
   locating a reference light beam in the beam matrix (806);
   locating a row pivot beam in the beam matrix based on the reference beam (810), said row pivot beam being the same-row beam on the right side of the reference beam;
   locating remaining reference row beams of a reference row that includes the row pivot beam and the reference beam (810);
   locating a column pivot beam in the beam matrix based on the reference beam (812), said column pivot beam being the next same-column beam on the topside of the reference beam;
   locating remaining reference column beams of a reference column that includes the column pivot beam and the reference beam (812); and
   locating remaining ones of the light beams in the beam matrix (814); wherein the step of locating a reference beam in the beam matrix (806) includes the steps of:

      providing an initial search window centered approximately at the center of the beam matrix; and
      locating the reference beam, where the reference beam corresponds to the light beam within the search window whose energy is the greatest.

2. The method (800) of claim 1, wherein the surface of the target has a substantially uniform reflectivity and further including the step of:

directing the plurality of light beams toward the target, wherein the plurality of light beams produce the beam matrix on the surface of the target;

**3.** The method (800) of claim 1, further including the step of:

determining boundaries of the beam matrix (816).

**4.** The method (800) of claim 1, further including the step of:

labeling the beams of the beam matrix with conventional beam labels (818).

**5.** The method (800) of claim 1, wherein the surface of the target is substantially planar and has substantially uniform reflectivity.

**6.** The method (800) of claim 1, wherein the step of locating the reference beam (806) includes the additional steps of:

calculating a center of gravity of the reference beam;
providing an isolated search window centered about the center of gravity of the reference beam; and
updating the center of gravity of the reference beam.

**7.** The method (800) of claim 1, wherein the light beams of the beam matrix are arranged in seven rows and fifteen columns.

**8.** An object surface characterization system (1) for characterizing a surface of a target, the system (1) comprising:

a light projector (10/12);
a camera (17);
a processor (19) coupled to the light projector (10/12) and the camera (17); and
a memory subsystem (21) coupled to the processor (19), the memory subsystem (21) storing code that when executed by the processor (19) instructs the processor (19) to perform the steps of:

directing the light projector (10/12) to provide a plurality of light beams arranged in a beam matrix of rows and columns, wherein the light beams impinge on the surface of the target and are reflected from the surface of the target;
directing the camera (17) to capture the plurality of light beams of the beam matrix after reflection from the surface of the target (804);
locating a reference light beam in the captured beam matrix (806);
locating a row pivot beam in the captured beam matrix based on the reference beam (810), said row pivot beam being the same-row beam on the right side of the reference beam; locating remaining reference row beams of a reference row that includes the row pivot beam and the reference beam (810);
locating a column pivot beam in the captured beam matrix based on the reference beam (812), said column pivot beam being the next same-column beam on the topside of the reference beam; locating remaining reference column beams of a reference column that includes the column pivot beam and the reference beam (812); and
locating remaining ones of the light beams in the beam matrix (814);

wherein the step of locating a reference beam in the beam matrix (806) includes the steps of:

providing an initial search window centered approximately at the center of the beam matrix; and
locating the reference beam, where the reference beam corresponds to the light beam within the search window whose energy is the greatest.

**9.** The system (1) of claim 8, wherein the surface of the target has a substantially uniform reflectivity.

**10.** The system (1) of claim 8, wherein the memory subsystem (21) stores additional code for causing the processor (19) to perform the additional step of:

determining boundaries of the captured beam matrix (816).

**11.** The system (1) of claim 8, wherein the memory subsystem (21) stores additional code for causing the processor (19) to perform the additional step of:

labeling the beams of the beam matrix with conventional beam labels (818).

**12.** The system (1) of claim 8, wherein the surface of the target is substantially planar and has substantially uniform reflectivity.

**13.** The system (1) of claim 8, wherein the step of locating the reference beam (806) includes the additional steps of:

calculating a center of gravity of the reference beam;
providing an isolated search window centered about the center of gravity of the reference beam; and
updating the center of gravity of the reference beam.

**14.** The system (1) of claim 8, wherein the light beams of the beam matrix are arranged in seven rows and fifteen columns.


**Patentansprüche**

**1.** Verfahren (800) zum Identifizieren von Strahlbildern einer Strahlmatrix, das die Schritte aufweist:

Empfangen einer Vielzahl von Lichtstrahlen einer Strahlmatrix nach Reflexion von einer Oberfläche eines Ziels (804), wobei die Strahlmatrix in Zeilen und Spalten angeordnet ist;
Lokalisieren eines Referenzlichtstrahls in der Strahlmatrix (806);
Lokalisieren eines Zeilepivotstrahls in der Strahlmatrix basierend auf dem Referenzstrahl (810), wobei der Zeilepivotstrahl der Strahl in derselben Zeile auf der rechten Seite des Referenzstrahls ist;
Lokalisieren verbleibender Referenzzeilenstrahlen einer Referenzzeile, die den Zeilepivotstrahl und den Referenzstrahl (810) umfasst;
Lokalisieren eines Spaltepivotstrahls in der Strahlmatrix basierend auf dem Referenzstrahl (812), wobei der Spaltepivotstrahl der nächste Strahl derselben Spalte über dem Referenzstrahl ist;
Lokalisieren von verbleibenden Referenzspaltenstrahlen einer Referenzspalte, die den Spaltepivotstrahl und den Referenzstrahl (812) umfasst; und
Lokalisierung von verbleibenden der Lichtstrahlen in der Strahlmatrix (814);
wobei der Schritt des Lokalisierens eines Referenzstrahls in der Strahlmatrix (806) die Schritte umfasst:

Vorsehen eines Anfangssuchfensters, das ungefähr in der Mitte der Strahlmatrix zentriert ist; und
Lokalisieren des Referenzstrahls, wobei der Referenzstrahl dem Lichtstrahl in dem Suchfenster entspricht, dessen Energie am größten ist.

**2.** Das Verfahren (800) gemäß Anspruch 1, wobei die Oberfläche des Ziels ein im Wesentlichen gleichförmiges Reflexionsvermögen hat und weiter den Schritt umfasst:

Richten der Vielzahl von Lichtstrahlen in Richtung des Ziels, wobei die Vielzahl von Lichtstrahlen die Strahlmatrix auf der Oberfläche des Ziels erzeugen.

**3.** Das Verfahren (800) gemäß Anspruch 1, das weiter den Schritt aufweist:

Bestimmen von Grenzen der Strahlmatrix (816).

**4.** Das Verfahren (800) gemäß Anspruch 1, das weiter den Schritt aufweist:

Markieren der Strahlen der Strahlmatrix mit herkömmlichen Strahlmarkierungen (818).

**5.** Das Verfahren (800) gemäß Anspruch 1, wobei die Oberfläche des Ziels im Wesentlichen eben ist und ein im Wesentlichen gleichförmiges Reflexionsvermögen hat.

**6.** Das Verfahren (800) gemäß Anspruch 1, wobei der Schritt des Lokalisierens des Referenzstrahls (806) die zusätzlichen Schritte umfasst:

Berechnen eines Schwerpunkts des Referenzstrahls;

Vorsehen eines isolierten Suchfensters, das um den Schwerpunkt des Referenzstrahls zentriert ist; und

Aktualisieren des Schwerpunkts des Referenzstrahls.

7. Das Verfahren (800) gemäß Anspruch 1, wobei die Lichtstrahlen der Strahlmatrix in sieben Zeilen und fünfzehn Spalten angeordnet sind.

8. Ein Objektoberflächencharakterisierungssystem (1) zum Charakterisieren einer Oberfläche eines Ziels, wobei das System (1) aufweist:

einen Lichtprojektor (10/12);

eine Kamera (17);

einen Prozessor (19), der mit dem Lichtprojektor (10/12) und der Kamera (17) gekoppelt ist; und

ein Speicherteilsystem (21), das mit dem Prozessor (19) gekoppelt ist, wobei das Speicherteilsystem (21) einen Code speichert, der bei Ausführung durch den Prozessor (19) den Prozessor (19) anweist, die Schritte auszuführen:

Anweisen des Lichtprojektors (10/12) zum Vorsehen einer Vielzahl von Lichtstrahlen, die in einer Strahlmatrix von Zeilen und Spalten angeordnet sind, wobei die Lichtstrahlen auf die Oberfläche des Ziels auftreffen und von der Oberfläche des Ziels reflektiert werden;

Anweisen der Kamera (17) zum Erfassen der Vielzahl von Lichtstrahlen der Strahlmatrix nach Reflexion von der Oberfläche des Ziels (804);

Lokalisieren eines Referenzlichtstrahls in der erfassten Strahlmatrix (806);

Lokalisieren eines Zeilepivotstrahls in der erfassten Strahlmatrix basierend auf dem Referenzstrahl (810), wobei der Zeilepivotstrahl der Strahl in derselben Zeile auf der rechten Seite des Referenzstrahls ist;

Lokalisieren verbleibender Referenzzeilenstrahlen einer Referenzzeile, die den Zeilepivotstrahl und den Referenzstrahl (810) umfasst;

Lokalisieren eines Spaltepivotstrahls in der erfassten Strahlmatrix basierend auf dem Referenzstrahl (812), wobei der Spaltepivotstrahl der nächste Strahl derselben Spalte über dem Referenzstrahl ist;

Lokalisieren von verbleibenden Referenzspaltenstrahlen einer Referenzspalte, die den Spaltepivotstrahl und den Referenzstrahl (812) umfasst; und

Lokalisierung von verbleibenden der Lichtstrahlen in der Strahlmatrix (814);

wobei der Schritt des Lokalisierens eines Referenzstrahls in der Strahlmatrix (806) die Schritte umfasst:

Vorsehen eines Anfangssuchfensters, das ungefähr in der Mitte der Strahlmatrix zentriert ist; und

Lokalisieren des Referenzstrahls, wobei der Referenzstrahl dem Lichtstrahl in dem Suchfenster entspricht, dessen Energie am größten ist.

9. Das System (1) gemäß Anspruch 8, wobei die Oberfläche des Ziels ein im Wesentlichen gleichförmiges Reflexionsvermögen hat.

10. Das System (1) gemäß Anspruch 8, wobei das Speicherteilsystem (21) zusätzlichen Code speichert, um den Prozessor (19) zu veranlassen, den zusätzlichen Schritt durchzuführen:

Bestimmen von Grenzen der erfassten Strahlmatrix (816).

11. Das System (1) gemäß Anspruch 8, wobei das Speicherteilsystem (21) zusätzlichen Code speichert, um den Prozessor (19) zu veranlassen, den zusätzlichen Schritt durchzuführen:

Markieren der Strahlen der Strahlmatrix mit herkömmlichen Strahlmarkierungen (818).

12. Das System (1) gemäß Anspruch 8, wobei die Oberfläche des Ziels im Wesentlichen eben ist und ein im Wesentlichen gleichförmiges Reflexionsvermögen hat.

13. Das System (1) gemäß Anspruch 8, wobei der Schritt des Lokalisierens des Referenzstrahls (806) die zusätzlichen Schritte umfasst:

Berechnen eines Schwerpunkts des Referenzstrahls;

Vorsehen eines isolierten Suchfensters, das um den Schwerpunkt des Referenzstrahls zentriert ist; und

Aktualisieren des Schwerpunkts des Referenzstrahls.

14. Das System (1) gemäß Anspruch 8, wobei die Lichtstrahlen der Strahlmatrix in sieben Zeilen und fünfzehn Spalten angeordnet sind.

**Revendications**

1. Procédé (800) pour identifier des images de faisceaux d'une matrice de faisceaux, comprenant les étapes consistant à :

recevoir une pluralité de faisceaux de lumière d'une matrice de faisceaux après réflexion depuis une surface d'une cible (804), dans lequel la matrice de faisceaux est agencé en rangées et en colonnes ;
localiser un faisceau de lumière de référence dans la matrice de faisceaux (806) ;
localiser un faisceau pivot de rangée dans la matrice de faisceaux sur la base du faisceau de référence (810), ledit faisceau pivot de rangée étant le faisceau de la même rangée sur le côté droit du faisceau de référence ;
localiser des faisceaux de rangées de référence restants d'une rangée de référence qui inclut le faisceau pivot de rangée et le faisceau de référence (810) ;
localiser un faisceau pivot de colonne dans la matrice de faisceaux sur la base du faisceau de référence (812), ledit faisceau pivot de colonne étant le faisceau suivant de la même colonne sur le côté supérieur du faisceau de référence ;
localiser des faisceaux de colonnes de référence restants d'une colonne de référence qui inclut le faisceau pivot de colonne et le faisceau de référence (812) ; et
localiser des faisceaux restants parmi les faisceaux de lumière dans la matrice de faisceaux (814) ;
dans lequel l'étape de localisation d'un faisceau de référence dans la matrice de faisceaux (806) inclut les étapes consistant à :

prévoir une fenêtre de recherche initiale centrée approximativement au centre de la matrice de faisceau ; et
localiser le faisceau de référence, de sorte que le faisceau de référence correspond au faisceau de lumière à l'intérieur de la fenêtre de recherche dont l'énergie est la plus grande.

2. Procédé (800) selon la revendication 1, dans lequel la surface de la cible a une réflectivité sensiblement uniforme, et incluant en outre l'étape consistant à :

diriger la pluralité de faisceaux de lumière vers la cible, de sorte que la pluralité de faisceaux de lumière produisent la matrice de faisceau sur la surface de la cible.

3. Procédé (800) selon la revendication 1, incluant en outre l'étape consistant à :

déterminer des frontières de la matrice de faisceaux (816).

4. Procédé (800) selon la revendication 1, incluant en outre l'étape consistant à :

étiqueter les faisceaux de la matrice de faisceaux avec des étiquettes de faisceau traditionnelles (818).

5. Procédé (800) selon la revendication 1, dans lequel la surface de la cible est sensiblement plane et a une réflectivité sensiblement uniforme.

6. Procédé (800) selon la revendication 1, dans lequel l'étape de localisation du faisceau de référence (806) inclut les étapes additionnelles consistant à :

calculer un centre de gravité du faisceau de référence ;
prévoir une fenêtre de recherche isolée centrée autour du centre de gravité du faisceau de référence ; et
mettre à jour le centre de gravité du faisceau de référence.

7. Procédé (800) selon la revendication 1, dans lequel les faisceaux de lumière de la matrice de faisceau sont agencés en 7 rangées et 15 colonnes.

8. Système de caractérisation de la surface d'un objet (1) pour caractériser une surface d'une cible, le système (1) comprenant :

un projecteur de lumière (10/12) ;
une caméra (17) ;
un processeur (19) couplé au projecteur de lumière (10/12) et à la caméra (17) ; et
un sous-système de mémoire (21) couplé au processeur (19), le sous-système de mémoire (21) stockant un code qui, lorsqu'il est exécuté par le processeur (19), donne instruction au processeur (19) d'exécuter les étapes consistant à :

diriger le projecteur de lumière (10/12) pour fournir une pluralité de faisceaux de lumière agencés dans une matrice de faisceaux de rangées et de colonnes, dans lequel les faisceaux de lumière viennent frapper sur la surface de la cible et sont réfléchis depuis la surface de la cible ;
diriger la caméra (17) pour capturer la pluralité de faisceaux de lumière dans la matrice de faisceaux après réflexion depuis la surface de la cible (804) ;
localiser un faisceau de lumière de référence dans la matrice de faisceaux capturée (806) ;
localiser un faisceau pivot de rangée dans la matrice de faisceaux capturée sur la base du faisceau de référence (810), ledit faisceau pivot de rangée étant le faisceau dans la même rangée sur le côté droit du faisceau de référence ;
localiser des faisceaux de rangées de référence restants d'une rangée de référence qui inclut le faisceau pivot de rangée et le faisceau de référence (810) ;
localiser un faisceau pivot de colonne dans la matrice de faisceaux capturée sur la base du faisceau de référence (812), ledit faisceau pivot de colonne étant le faisceau suivant dans la même colonne sur le côté supérieur du faisceau de référence ;
localiser des faisceaux de colonne de référence restants d'une colonne de référence qui inclut le faisceau pivot de colonne et le faisceau de référence (812) ; et
localiser des faisceaux restants parmi les faisceaux de lumière dans la matrice de faisceaux (814) ;

dans lequel l'étape de localisation d'un faisceau de référence dans la matrice de faisceaux (806) inclut les étapes consistant à :

prévoir une fenêtre de recherche initiale centrée approximativement au centre de la matrice de faisceaux ; et
localiser le faisceau de référence, de sorte que le faisceau de référence correspond au faisceau de lumière à l'intérieur de la fenêtre de recherche dont l'énergie est la plus grande.

9. Système (1) selon la revendication 8, dans lequel la surface de la cible à une réflectivité sensiblement uniforme.

10. Système (1) selon la revendication 8, dans lequel le sous-système de mémoire (21) stocke un code additionnel pour amener le processeur (19) à exécuter l'étape additionnelle consistant à :

déterminer des frontières de la matrice de faisceaux capturée (816).

11. Système (1) selon la revendication 8, dans lequel le sous-système de mémoire (21) stocke un code additionnel pour amener le processeur (19) à exécuter l'étape additionnelle consistant à :

étiqueter les faisceaux de la matrice de faisceau avec des étiquettes de faisceau traditionnelles (818).

12. Système (1) selon la revendication 8, dans lequel la surface de la cible est sensiblement plane et a une réflectivité sensiblement uniforme.

13. Système (1) selon la revendication 8, dans lequel l'étape de localisation du faisceau de référence (806) inclut les étapes additionnelles consistant à :

calculer un centre de gravité du faisceau de référence ;
prévoir une fenêtre de recherche isolée centrée autour du centre de gravité du faisceau de référence ; et
mettre à jour le centre de gravité du faisceau de référence.

14. Système (1) selon la revendication 8, dans lequel les faisceaux de lumière de la matrice de faisceau sont agencés en 7 rangées et 15 colonnes.

# Fig.1.

# Fig.2A.

# Fig.2B.

# Fig.3A.

300

# Fig.3B.

302

# Fig.3C.

304

# Fig.4.

**Fig.5.**

X = NOMINAL COLUMN SPACING
y = NOMINAL ROW SPACING
Sx = ROW_STEP_X
Sy = ROW_STEP_Y

**Fig.6.**

## Fig.7.

800

( START )—802

804

GRAB NEW FRAMES AND MAKE DIFFERENTIAL.
LOCATE THE STARTING SEARCHING POINT (Xi,Yi)

806

SELECT REFERENCE BEAM FROM INITIAL
SEARCHING WINDOW CENTRED AT (Xi,Yi) WITH
WINDOW SIZE $2a_0COS\theta_0X2b_0COS\theta_0$
CALCULATE THE CENTRE OF GRAVITY

808

SET ISOLATED SEARCHING WINDOW AT THE
CENTRE OF GRAVITY AND UPDATE THE CENTRE
OF GRAVITY OF BEAM(0,0)

810

FIND THE ROW PIVOT BEAM USING NOMINAL
MATRIX STRUCTURE. UPDATE THE MATRIX ROW
STRUCTURE AS NEXT "ROW WALKING STEPS"

812

FIND THE COLUMN PIVOT BEAM FROM THE
REFERENCE BEAM AND UPDATE THE MATRIX
COLUMN STRUCTURE AS NEXT "COLUMN
WALKING STEPS"

814

USING "WALKING ALGORITHM" TO FIND
ALL BEAMS IN THE MATRIX

186

DROP INVALID BEAMS ACCORDING
TO PARTICULAR ALGORITHMIC RULES

818

LABEL ALL VALID BEAMS ACCORDING
TO PARTICULAR ALGORITHM RULES

( END )—820

## Fig.8.

902 — ( START )                    900

904 — FROM BEAM(m,0) WALK TO THE NEXT RIGHT BEAM USING UPDATED LOCAL ROW_STEP_X AND ROW_STEP_Y

906 — OPEN ISOLATED SEARCHING WINDOW CENTRED AT THE "WALKING POINT", FIND A VALID BEAM WHICH HAS LARGEST ENERGY IN THE WINDOW

908 — FOUND THE BEAM AND THE BEAM IS NEAR THE CENTRE OF THE WINDOW ?

NO

YES

910 — UPDATE ROW_STEP_X & ROW_STEP_Y WALKING TO THE NEXT RIGHT BEAM

912 — FROM BEAM(m,0) WALK TO THE NEXT LEFT BEAM USING UPDATED LOCAL ROW_STEP_X AND ROW_STEP_Y

914 — OPEN ISOLATED SEARCHING WINDOW CENTRED AT THE "WALKING POINT". FIND A VALID BEAM WHICH HAS LARGEST ENERGY IN THE WINDOW

916 — FOUND THE BEAM AND THE BEAM IS NEAR THE CENTRE OF THE WINDOW ?

NO

YES

918 — CHANGE TO NEW ROW AT STEP 1002

UPDATE ROW_STEP_X & ROW_STEP_Y WALKING TO THE NEXT LEFT BEAM

920

## Fig.9.

1002 ( START )

1000

1004

FROM BEAM(m,0) WALKING UP TO BEAM(m+1,0), COLUMN_STEP_X COLUMN_STEP_Y

1006

TOUCH TOP BOUNDARY ?

YES

1008
SHIFT RIGHT ONE COLUMN

NO

1010
OPEN ISOLATED SEARCHING CENTRED AT THE "WALKING POINT", FIND A VALID BEAM WHICH HAS THE LARGEST ENERGY

1012
VALID BEAM NEAR THE CENTRE OF THE WINDOW ?

NO

YES

1014
START "LOCATE BEAMS IN ROWS" AT STEP 902

1016
FROM BEAM(m,0) WALKING DOWN TO BEAM(m-1,0), COLUMN_STEP_X COLUMN_STEP_Y

1018
TOUCH BOTTOM BOUNDARY ?

YES

1022
SHIFT LEFT ONE COLUMN

NO

1020
OPEN ISOLATED SEARCHING CENTRED AT THE "WALKING POINT", FIND A VALID BEAM WHICH HAS LARGEST ENERGY

1024
VALID BEAM NEAR THE CENTRE IF THE WINDOW ?

NO

YES

1026
START "DETERMINE MATRIX BOUNDARIES" AT STEP 1102

# Fig.10.

```
                    START  ⟶1102                    1100
                                                      ↙

                      ⟍1104
                  SELECT NEW ROW

                  COUNT THE NUMBER OF    1106
                  BEAMS IN THE ROW

              1108                THE #
        NO                       OF BEAMS              YES
                                  >=15 ?
    1114⟍                                        ⟍1110
  DROP THIS ROW AND                      COMPARE THE ENERGIES OF THE
  ALL OUTSIDE ROWS                       END-BEAMS IN THE ROW AND
                                         DROP THE LESS ENERGY ONE
                                         UNTIL 15 BEAMS REMAIN

                    ⟍1116                          1112
          OTHER                                    ⟍
     NO   DIRECTION      YES              YES    ALL ROWS    NO
          TESTED                                 TESTED ?
          ?

                  CALCULATE THE AVERAGE    1118
                  ENERGY OF EACH ROW

          1128
  CHANGE TEST           FROM ROW 0 OUTWARDS,
  DIRECTIONS            CALCULATE BEAM ENERGY DROPS
                        BETWEEN ADJACENT ROWS

              1120                1122
                    YES    ENERGY DROP>     NO
  1126⟍                    THRESHOLD ?
  DROP THIS ROW AND
  ALL OUTSIDE ROWS                      1124
  OUTWARDS                    YES    ALL ROWS    NO
                                     TESTED ?
          1130
          BOTH
     NO   DIRECTIONS     YES
          TESTED                  START RE-LABEL    1132
          ?                       AT STEP 1202
```

# Fig.11.

$1202$ — START

$1204$

**PSEUDO_LABELED BEAMS:**
ROW #: 0,1,2 ... M,-1,-2 ... N(N IS NEGATIVE)
COL #: 0,1,2 ... P,-1,-2 ... Q(Q IS NEGATIVE)
TOTAL ROWS=M+1+ABS(N)
LEFTCOLS=ABS(Q)

$1200$

$1206$

**TOTAL ROWS=7 ?**

YES → NO →

$1208$

IF PSEUDO_ROW # >=0, THEN NEW ROW # =M-PSEUDO_ROW #
ELSE NEW ROW # =M+ABS(PSEUDO_ROW #)
NEW COLUMN # =PSEUDO_COL NO. + LEFTCOLS

$1210$

**TOUCH TOP FRAME BOUNDARY ?**

YES   NO

$1212$

NEW ROW # =6-PSEUDO_ROW # -ABS(N)
NEW COLUMN # =PSEUDO_COL # +LEFTCOLS

$1214$

NEW ROW # =M-PSUEDO_ROW #
NEW COLUMN # =PSEUDO_COL # + LEFTCOLS

END — $1216$

EP 1 574 819 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1429113 A1

- EP 1431708 A2

**Non-patent literature cited in the description**

- Measurement of the 3-D Shape of Specular Polyhedrons Using an M-Array Coded Light Source. *IEEE TRANSACTIONS ON INSTRUMENTATION AND MEASUREMENT,* June 1995, vol. 4 (3